# EUROPÄISCHE PATENTANMELDUNG

(11) **EP 4 686 731 A1**
(43) Veröffentlichungstag der Anmeldung: **04.02.2026**
(21) Anmeldenummer: 24192398.6
(22) Anmeldetag: 01.08.2024
(51) Int. Cl.: C08J 9/00, C08L 67/02, B29D 7/01

(54) **KUNSTSTOFFRECYCLINGPLATTE ZUR VERWENDUNG ALS DACHELEMENT UND/ODER WANDELEMENT UND VERFAHREN ZUM HERSTELLEN EINER KUNSTSTOFFRECYCLINGPLATTE**

(71) Anmelder: Salux GmbH, 06526 Sangerhausen (DE)
(72) Erfinder: Schendzielorz, Anja, 06526 Sangerhausen (DE); von Lien, Wolfgang, 27404 Zeven (DE)
(74) Vertreter: Weidner Stern Jeschke

(57) **Zusammenfassung**

Die Erfindung betrifft eine Kunststoffrecylingplatte zur Verwendung als Dachelement und/oder Wandelement, wobei die Kunststoffrecylingplatte mindestens 50,0 Massenprozent recyceltes, mit Glykol modifiziertes Polyethylenterephthalat aufweist. Des Weiteren betrifft die Erfindung ein Verfahren zum Herstellen einer Kunststoffrecyclingplatte. Somit kann eine profilierte Recyclingplatte aus einem Blend recycelter Kunststoffe bereitgestellt werden.

## Beschreibung

Die Erfindung betrifft eine Kunststoffrecyclingplatte zur Verwendung als Dachelement und/oder Wandelement. Des Weiteren betrifft die Erfindung ein Verfahren zum Herstellen einer Kunststoffrecyclingplatte.

Zur Dachabdeckung mit lichtundurchlässigen und/oder opaken Materialien werden neben Dachziegeln, Profilblechen und/oder Faserzementplatten bisher vor allem Bitumenbahnen und/oder Bitumenwellplatten eingesetzt. Des Weiteren werden Profilplatten aus lichtdurchlässigem oder opaken Kunststoff vor allem für Carport- und Scheunendächer verwendet. Dabei kommen vorwiegend Hart-Polyvinylchlorid, Polycarbonat oder Polymethylmethacrylat zur Anwendung, wobei die Polymere jeweils als Hauptkomponente unter Zusatz von Additiven verwendet werden. Dadurch weisen die gefertigten Kunststoffplatten entsprechend ihrer Materialeigenschaften unterschiedliche Dauerhaftigkeiten beim Außeneinsatz auf. Neben der mechanischen Stabilität und der gewünschten Lichtdurchlässigkeit oder Opazität werden an Kunststoffplatten zur Dacheindeckung weitere Anforderungen, wie die Beständigkeit gegen Witterungseinflüsse und UV-Strahlung, Brandbeständigkeit, Schneelast, Geräuschstärke bei Niederschlag und/oder Hagelschlag, gestellt. Im Vergleich zu einem Ziegeldach liegen die Vorteile der Kunststoffprodukte vor allem im relativ geringen Flächengewicht und der kostengünstigen und einfachen Verlegung.

Es sind bisher Flachplatten aus sortenreinem, recyceltem Kunststoff, wie ABS (Acrylnitril-Butadien-Styrol-Copolymer), HDPE (High-Density Polyethylen) oder Polystyrol bekannt, welche beispielsweise als Gehäuseteile in Industrieanlagen oder als Wurzelschutzplatten im Garten- und/oder Landschaftsbau eingesetzt werden. Allgemein erhält die Verwendung von Recyclingmaterialien aufgrund von Nachhaltigkeitsaspekten bei Bauprodukten eine zunehmende Bedeutung.

Zudem ist bekannt, dass zur Herstellung von Kunststoffplatten aus glykolmodifiziertem Polyethylenterephthalat (PET-G), ABS, Polymethylmethacrylat (PMMA) oder Polyolefinen üblicherweise Einschneckenextruder genutzt werden. Hierbei ermöglicht ein Einschneckenextruder durch seine meist sehr lange Schnecke günstige Verarbeitungstemperaturen für ein optimales Aufschmelzverhalten, insbesondere bei längerer Verweilzeit, des jeweiligen Kunststoffes.

Aufgabe der Erfindung ist es, den Stand der Technik zu verbessern.

Gelöst wird die Aufgabe durch eine Kunststoffrecyclingplatte zur Verwendung als Dachelement und/oder Wandelement, wobei die Kunststoffrecyclingplatte mindestens 50,0 Massenprozent recyceltes, mit Glykol modifiziertes Polyethylenterephthalat aufweist.

Somit wird eine Kunststoffrecyclingplatte bereitgestellt, welche zumindest zur Hälfte ihrer Masse recyceltes, mit Glykol modifiziertes Polyethylenterephthalat (PET-G) und damit ein Recyclingmaterial aufweist, welches den zunehmenden Anforderungen an die Nachhaltigkeit von Bauprodukten gerecht wird. Dadurch wird ein Dachelement und/oder Wandelement aufweisend zumindest einen recyclierten Kunststoff bereitgestellt, welches zur Neueindeckung oder Sanierung von Dach- und/oder Wandkonstruktionen verwendet werden kann.

Dadurch können die großen, jährlich in der Verpackungsbranche anfallenden Kunststoffabfallmengen aus transparentem PET-G, welche meist aus hygienischen Gründen nicht in einen Verarbeitungsprozess zurückgeführt werden dürfen, wie beispielsweise Blister- und Folienabfälle, als Hauptkomponente zur Fertigung der erfindungsgemäßen, insbesondere lichtdurchlässigen, Kunststoffrecyclingplatte eingesetzt werden.

Beispielsweise kann eine lichtdurchlässige Kunststoffrecyclingplatte 99,6 Prozent PET-G, 0,3 Prozent UV-Stabilisator und 0,1 Prozent Antiblockingmittel aufweisen.

Ein wesentlicher Gedanke der Erfindung beruht darauf, mit mindestens 50,0 Massenprozent recyceltem, mit Glykol modifiziertem Polyethylenterephthalat als Hauptkomponente ausschließlich recyceltes Kunststoffmaterial, beispielsweise Sekundärware und/oder Post-Industrial-Material, einzusetzen, um einen wichtigen Beitrag zur Kreislaufwirtschaft und zu einer verbesserten Nachhaltigkeit in der Kunststoffindustrie zu leisten. Gleichzeitig hat die Erfindung das Ziel, den Anforderungen an die geforderten Eigenschaften der Kunststoffrecyclingplatte bei einer Verwendung als Dachelement und/oder Wandelement, wie der jeweils gewünschten Lichtdurchlässigkeit oder Opazität, der mechanischen Stabilität, der Beständigkeit gegen Witterungseinflüsse und/oder UV-Strahlung, den Flammschutzeigenschaften, der Geräuschminderung oder der erforderlichen Flächen- und/oder Schneelast, gerecht zu werden.

### Folgendes Begriffliche sei erläutert:

Eine "Kunststoffrecyclingplatte" ist insbesondere ein Bauteil mit einer gleichen Materialstärke, welches auf zwei gegenüberliegenden Seiten von je einer im Verhältnis zur Materialstärke sehr ausgedehnten Fläche begrenzt wird und mindestens 50,0 Massenprozent eines recycelten Kunststoffmaterials aufweist. Die Kunststoffrecyclingplatte weist insbesondere glykolmodifiziertes Polyethylenterephthalat (PET-G) als mindestens ein recyceltes Kunststoffmaterial auf. Die Kunststoffrecyclingplatte ist insbesondere aus einem Kunststoffblend aufweisend zumindest 50,0 Massenprozent recyceltes PET-G gefertigt. Die Kunststoffrecyclingplatte weist insbesondere eine durchgehende Materialstärke auf. Die Kunststoffrecyclingplatte ist insbesondere einschalig und/oder einstückig. Die Kunststoffrecyclingplatte kann vollständig oder zumindest teilweise lichtdurchlässig sein. Ebenso kann die Kunststoffrecyclingplatte opak und damit lichtundurchlässig sein. Zudem kann die Kunststoffrecyclingplatte auch eingefärbt sein. Beispielsweise kann die Kunststoffrecyclingplatte eine Lichtplatte sein, welche in einem Dach einsetzbar oder als Dach verwendbar ist, um Tageslicht in einen daruntergelegenen Raum durchzulassen. Bei der Kunststoffrecyclingplatte kann es sich um eine ebene, unprofilierte Platte, eine teilweise profilierte Platte und/oder eine vollständig oder unterschiedlich profilierte Platte handeln. Eine profilierte Kunststoffrecyclingplatte kann insbesondere jegliche Profilform aufweisen. Bei einer profilierten Kunststoffrecyclingplatte kann es sich beispielsweise um eine Profilplatte im Sinus- oder Trapezprofil ohne oder mit eingeprägter Struktur, beispielsweise einer Waben- oder Froststruktur, handeln. Die Kunststoffrecyclingplatte kann zusätzlich beschichtet sein. Die Kunststoffrecyclingplatte kann eine Materialstärke in einem Bereich von 0,5 mm bis 4,0 mm, insbesondere von 0,7 mm bis 3,5 mm, bevorzugt von 0,7 mm bis 2,8 mm, aufweisen. Im Falle einer profilierten Kunststoffrecyclingplatte sind die Profilhöhe und die Profilbreite prinzipiell frei wählbar. Beispielsweise liegt die Profilhöhe in einem Bereich von 5,0 mm bis 51,0 mm und die Profilbreite in einem Bereich von 20,0 mm bis 250,0 mm. Insbesondere kommen Wellprofilformen mit 76,0 mm oder 94,0 mm Profilbreite und 18,0 mm oder 34,0 mm Profilhöhe und somit im Profil 76/18 oder 94/34 zur Anwendung. Für ein gutes Verlegen der Kunststoffrecyclingplatte durch den Anwender wird insbesondere eine Materialstärke von ≤ 3,0 mm aufgrund der dann noch gut handhabbaren Flächenmasse der Kunststoffrecyclingplatte bevorzugt.

Unter "lichtdurchlässig" und "Lichtdurchlässigkeit" wird insbesondere die Fähigkeit der Kunststoffrecyclingplatte verstanden, Licht und/oder elektromagnetische Wellen durchzulassen. Die Lichtdurchlässigkeit bezieht sich insbesondere auf den für den Menschen sichtbaren Spektralbereich von 380 nm bis 780 nm. Die Lichtdurchlässigkeit kann beispielsweise in Prozent angegeben werden, wobei als Bezugsgröße eine Transmission von 100 % bei einer Öffnung frei von der Kunststoffrecyclingplatte verwendet wird. Angaben zur Lichtdurchlässigkeit sind insbesondere entsprechend der DIN EN ISO 13468-1:2019-10 unter Normallicht D65 als Testmethode bestimmt. Unter "transparent" werden insbesondere klare Materialien mit einer geringen Streuung verstanden.

Unter "opak" oder "lichtundurchlässig" wird insbesondere das Gegenteil von lichtdurchlässig und/oder transparent verstanden. Die "Opazität" ist insbesondere ein Maß für die Lichtundurchlässigkeit (Trübung) von transluzenten (streuend lichtdurchlässigen) Materialien.

"Mit Glykol modifiziertes Polyethylenterephthalat" (PET-G, auch glykolmodifiziertes Polyethylenterephthalat) ist insbesondere ein Copolymer eines durch Polykondensation hergestellten thermoplastischen Kunststoffs aus der Familie der Polyester. Das mit Glykol modifizierte PET zeichnet sich insbesondere durch seine hohe Transparenz und niedrige Viskosität aus. Allgemein wird der Kunststoff PET-G hergestellt, indem insbesondere Terephthalsäure und Cyclohexandimethanol durch Polykondensation polymerisiert werden. Bei dem recycelten, mit Glykol modifizierten Polyethylenterephthalat handelt es sich jedoch bereits um ein mindestens einmal hergestelltes, verarbeitetes und/oder verwendetes PET-G. Das recycelte PET-G liegt für die Fertigung der Kunststoffrecyclingplatte insbesondere als trockenes Mahlgut und/oder Regranulat vor. Bei dem recycelten PET-G handelt es sich somit nicht um ein PET, welches erst recycelt und dem anschließend Glykol, in welcher Art und Weise auch immer, beigemengt worden ist.

Unter "recycelt" wird insbesondere verstanden, dass ein Kunststoffmaterial nach der Fertigung einem Prozess der Rückgewinnung und/oder Wiedergewinnung zugeführt wurde. Unter recycelt werden insbesondere auch Abfallprodukte aufweisend PET-G oder ABS verstanden, welche direkt in einem industriellen Produktionsprozess anfallen und gar nicht erst an einen Verbraucher zur Nutzung gelangen. Gleichzeitig werden unter Recyclingmaterialien auch Endprodukte der konsumgüterproduzierenden Industrie verstanden, die nach der Nutzung insbesondere als Hausmüll anfallen, gesammelt, aufbereitet und als Rohstoff zur Herstellung neuer Produkte wiederverwendet werden.

Unter "Glykol" wird insbesondere ein zweiwertiger Alkohol verstanden, welcher sich vom Ethylenglykol ableitet. Bei Glykol kann es sich beispielsweise um Ethylenglykol und/oder Propylenglykol handeln. Unter Glykol werden jedoch auch Derivate des Ethylenglykols, wie beispielsweise Methylglykol, verstanden.

In einer weiteren Ausführungsform weist die Kunststoffrecyclingplatte zusätzlich recyceltes Acrylnitril-Butadien-Styrol-Copolymer auf, wobei das recycelte, mit Glykol modifizierte Polyethylenterephthalat und das recycelte Acrylnitril-Butadien-Styrol-Copolymer sich, insbesondere als Kunststoffblend, bis zu 100,0 Massenprozent ergänzen.

Somit weist die Kunststoffrecyclingplatte als Hauptkomponente mindestens 50,0 Massenprozent recyceltes PET-G und zusätzlich recyceltes Acrylnitril-Butadien-Styrol-Copolymer (ABS) in möglichen Massenprozenten von maximal 50,0 Massenprozent auf. Folglich kann die Kunststoffrecyclingplatte als zwei Komponenten auch nur 50,0 Massenprozent PET-G und 50,0 Massenprozent ABS jeweils als recyceltes Material aufweisen.

Auch bei Herstellern von Kunststoffteilen aus ABS ist es häufig aus Qualitätsgründen nicht möglich, anfallende Produktionsabfälle selbst wieder direkt dem Fertigungsprozess zurückzuführen und diese in-line in der Fertigung wieder einzuarbeiten. Somit kann beispielsweise ABS-Regranulat von Automobilzulieferern für die Herstellung der Kunststoffrecyclingplatte verwendet werden.

Dadurch, dass die Kunststoffrecyclingplatte neben recyceltem PET-G zusätzlich recyceltes ABS enthält, wird insbesondere eine opake Kunststoffrecyclingplatte bereitgestellt. Bevorzugt weist die Kunststoffrecyclingplatte zusätzlich mindestens 20,0 Massenprozent an recyceltem ABS auf. Beispielsweise kann eine solche opake Kunststoffrecyclingplatte 64,0 Massenprozent recyceltes PET-G, 22,0 Massenprozent recyceltes ABS, 11,5 Massenprozent Schlagzähmodifier, 2,0 Massenprozent eines, beispielsweise grünen, Farbstoffes und maximal 0,5 Massenprozent Treibmittel aufweisen, wobei sich das Treibmittel während des Extrusionsprozesses zersetzt und das Kunststoffblend aufschäumt. Dementsprechend bezieht sich die Angabe des Treibmittels in Massenprozent auf die eingesetzte Treibmitteldosierung, welche zum Aufschäumen benötigt wird.

Unter "Acrylnitril-Butadien-Styrol-Copolymer" (ABS) werden insbesondere thermoplastische Terpolymere verstanden, bei welchen an eine Polybutadien-basierte Hauptkette kovalent Seitenketten aus Styrol-Acrylnitril-Copolymer (SAN) angebunden sind. Zur Fertigung von neuem ABS variieren die Zusammensetzungen insbesondere in einem Bereich von 5 bis 30 Massenprozent Butadien, 15 bis 35 Massenprozent Acrylnitril und 40 bis 60 Massenprozent Styrol. Allgemein wird unter ABS-Kunststoff auch ein Kunststoff aus Terpolymeren und/oder von Mischungen aus Acrylnitril, Butadien und Styrol hergestellten Polymeren und Copolymeren verstanden. ABS ist in Rohform insbesondere ein farbloser bis grauer Feststoff. Bei recycelten ABS handelt es sich insbesondere um ein wieder eingeschmolzenes und/oder granuliertes ABS. Die ABS-Recyclate sind insbesondere frei von Gummi- und/oder Metallpartikeln.

Um eine Profilplatte bereitzustellen, ist die Kunststoffrecyclingplatte zumindest teilweise profiliert.

Somit wird eine profilierte Kunststoffrecyclingplatte gefertigt aus einem recycelten Kunststoff oder aus einem Materialblend zweier recycelter Kunststoffe bereitgestellt.

In einer weiteren Ausführungsform ist die Kunststoffrecyclingplatte zumindest teilweise geschäumt.

Durch Schäumen während der Fertigung kann die Flächenmasse der Kunststoffrecyclingplatte verringert werden. Um eine geschäumte Kunststoffrecyclingplatte zu erhalten, kann in der Fertigung der Kunststoffrecyclingplatte ein Treibmittel bei der Extrusion zugesetzt werden. Dadurch kann beispielsweise eine 2,5 mm dicke und geschäumte Kunststoffrecyclingplatte erhalten werden, welche im Vergleich zu einer kompakten, ungeschäumten Kunststoffrecyclingplatte aus demselben Materialblend zu etwa 15 bis 25 Prozent aufgeschäumt ist. Beispielsweise weist eine 2,2 mm starke, geschäumte Platte in einem Profil 94/34 bei einem Schäumungsgrad von 20 % eine niedrigere Flächenmasse von 2,45 kg/m² im Vergleich zu einer 2,2 mm starken, ungeschäumten Platte in dem gleichen Profil 94/34 mit einer Flächenmasse von 2,95 kg/m² auf.

Um die Eigenschaften der Kunststoffrecyclingplatte gezielt weiter einzustellen, kann die Kunststoffrecyclingplatte zusätzlich mindestens ein Additiv aufweisen, wobei das recycelte PET-G und optional das recycelte ABS und das Additiv oder zwei oder mehrere Additive sich jeweils zu 100,0 Massenprozent ergänzen.

Ein "Additiv" ist insbesondere ein Hilfsstoff und/oder Zusatzstoff, welcher bei der Fertigung der Kunststoffrecyclingplatte in geringen Mengen zugesetzt wird, um bestimmte Eigenschaften der Kunststoffrecyclingplatte zu erreichen und/oder zu verbessern. Somit dient das mindestens eine Additiv insbesondere zum Schutz des recycelten Kunststoffes vor thermischem Abbau während dem Extrusionsprozess, einem besseren Handling, zur Stabilisierung gegen UV-induzierten Abbau während dem Gebrauch im Freien, zur Einstellung der erforderlichen mechanischen Festigkeit und/oder des zu erzielenden Flächengewichtes. Durch das mindestens eine Additiv wird die Modifikation und/oder Optimierung der Eigenschaften des Materialblends aus den recycelten Kunststoffen und folglich auch der Kunststoffrecyclingplatte ermöglicht.

Um die Eigenschaften gezielt einzustellen und/oder zu modifizieren, ist das Additiv oder sind zwei oder mehrere Additive ein Schlagzähmodifier, ein Farbstoff, ein UV-Stabilisator, ein Antiblockingmittel, ein Treibmittel, ein Füllstoff und/oder ein Flammschutzmittel.

Diese unterschiedlichen Additive können wahlweise ebenso in verschiedenen Anteilen während der Fertigung der Kunststoffrecyclingplatte zugeführt werden und sind dementsprechend in unterschiedlichen Massenprozenten in der gefertigten Kunststoffrecyclingplatte vorhanden, um die gewünschten Eigenschaften der Kunststoffrecyclingplatte einzustellen und zu realisieren.

Ein "Schlagzähmodifier" ist insbesondere ein Zusatzstoff, welcher die mechanische Festigkeit und/oder Schlagzähigkeit des recycelten PET-G und/oder ABS verbessert. Bei dem Schlagzähmodifier kann es sich insbesondere um einen Acrylat-Modifier handeln. Der Acrylat-Modifier kann insbesondere transparent sein, sodass neben der mechanischen Beständigkeit auch die Transparenz des recycelten PET-G und/oder des Materialblends einstellbar ist. Ein Acrylat-Modifier weist insbesondere eine Acrylat-Basis mit einer Core-Shell-Struktur (Kern-Schale-Struktur) auf. Bevorzugt wird ein funktionalisierter Acryl-Schlagzähmodifier für PET-G eingesetzt, welcher ein Acryl-Copolymer aufweist und ein funktionelles, wetterfestes Kernschalen Gummi zur Verbesserung der Schlageigenschaften von Polymeren, insbesondere Polyestertypen, ist. Dieser Schlagzähmodifier für PET-G weist insbesondere im Kern ein acrylatisches Elastomer und somit eine Acryl-Kern-Schale-Struktur auf. Dieser Schlagzähmodifier geht insbesondere eine chemische Verbindung mit der Polyestermatrix ein und wird beispielsweise mit 15 Massenprozent für eine Anwendung bei 23 °C und mit 20 bis 30 Massenprozent für eine Anwendung bei 0 °C eingesetzt. Bei einer Recyclingplatte aus Materialblend kann auch ein Modifier für opake Anwendungen eingesetzt werden. Zur Optimierung der mechanischen Eigenschaften der gefertigten Kunststoffrecyclingplatte wird im Extrusionsprozess zur Herstellung der Kunststoffrecyclingplatte der Schlagzähmodifier mit mindestens 5 Massenprozent, insbesondere mit mindestens 10 bis 15 Massenprozent und bevorzugt mit 11 Massenprozent zugesetzt. Bei einer reinen Recyclingplatte aus PET-G wird insbesondere wegen der bereits sehr guten mechanischen Stabilität kein Modifier eingesetzt.

Bei einem "Farbstoff" handelt es sich insbesondere um jegliche Art von Farbstoff, welcher zum Einfärben des recycelten PET-G und/oder recycelten ABS und/oder des Materialblends geeignet ist. Bei einem Farbstoff handelt es sich insbesondere um ein Farbkonzentrat in einem Kunststoffträger (auch Masterbatch genannt). Der Farbstoff ist insbesondere ein intensiv wirksames Farbgranulat. Beispielsweise kann es sich bei dem Farbstoff um ein Farbgranulat auf Basis von Polyethylen-Trägern handeln. In Abhängigkeit von der gewünschten Farbe werden die Farbbatches mit mindestens 0,2 Massenprozent und maximal mit 3,0 Massenprozent während der Extrusion zudosiert. Für die Herstellung der Kunststoffrecyclingplatte stehen insbesondere leicht getönte oder bunt gemischte Mahlgüter oder Regranulate aus PET-G und/oder meistens schwarze ABS-Regranulate zur Verfügung. Im Rahmen der durch die Farbe dieses Recyclingmaterials vorgegebenen Grenzen kann die Farbe der Kunststoffrecyclingplatte entsprechend mittels des Farbstoffes oder mehrerer Farbstoffe angepasst und/oder verändert werden. Neben einer kompletten schwarzen Einfärbung der Kunststoffrecyclingplatte bietet sich insbesondere durch Zudosieren von entsprechenden Farbbatches an der Extrusionsanlage auch die Fertigung von Kunststoffrecyclingplatten in dunkelgrünen, rotbraunen oder anthrazitfarbenen Farbvarianten an.

Ein "UV-Stabilisator" ist insbesondere ein Additiv, welches den Abbau der Polymerketten des recycelten Kunststoffes verlangsamen, jedoch nicht verhindern kann. Der UV-Stabilisator absorbiert insbesondere das UV-Licht und gibt dieses als Wärme ab. Der UV-Stabilisator ist insbesondere für eine bestimmte Wellenlänge oder einen bestimmten Wellenlängenbereich ausgelegt. Ein UV-Stabilisator kann insbesondere aus der Klasse der Hydroxyphenylbenzotriazole sein. Ein UV-Stabilisator wird insbesondere bei lichtdurchlässigen Platten aus recyceltem PET-G verwendet, jedoch nicht bei opaken Platten aus Materialblend.

Ein "Antiblockingmittel" ist insbesondere ein Zusatzstoff, welcher das Gleiten einer fertig produzierten Kunststoffrecyclingplatte nach einem Längenschnitt über bereits darunter liegende Platte auf einer Palette fördert. Weiterhin verhindert das Antiblockingmittel ein zu starkes Haften der fertig produzierten Platten aneinander, wenn diese gestapelt aufeinander liegen oder längere Zeit mehrere Fertigpaletten übereinander gelagert werden. Dem Endkunden bietet das Antiblockingmittel den Vorteil, dass die Platten einfacher und ohne zu starke Haftung aneinander vom Stapel entnommen werden können. Das Antiblockingmittel kann insbesondere die Oberfläche der Kunststoffrecyclingplatte aufrauen, wodurch die Kohäsionskräfte zwischen zwei Platten verringert werden und folglich die Kontaktfläche beider Oberflächen verkleinert wird. Bei dem Antiblockingmittel kann es sich um trägergebundene Mikro- und/oder Nanopartikel eines mineralischen (z.B. Kieselsäure) und/oder organischen Stoffes handeln, welche oder welcher der Kunststoffrecyclingplatte an ihrer Oberfläche Rauigkeit verleiht.

Ein "Treibmittel" ist insbesondere ein Zusatzstoff, welcher während der Fertigung in der Extrusionsanlage eingesetzt wird, um die Materialschmelze aus dem recycelten Kunststoffblend aufzuschäumen und dadurch das Gewicht des Extrudates zu reduzieren. Bei dem Treibmittel handelt es sich insbesondere um einen Gasbildner. Bei dem Treibmittel kann es sich um Gas und/oder ein endothermes Treibmittel handeln, bei dem durch Wärmezufuhr Gas gebildet wird, welches den Kunststoff und/oder die Materialschmelze aufschäumt. Ebenso kann es sich bei dem Treibmittel um ein exothermes Treibmittel handeln, bei welchem neben Gas Wärme freigesetzt wird. Prinzipiell sind alle handelsüblichen physikalischen und/oder chemischen Treibmittel bei der Fertigung der Kunststoffrecyclingplatte geeignet. Bevorzugt können insbesondere im Herstellungsprozess einer profilierten Kunststoffrecyclingplatte chemische Treibmittel eingesetzt werden. Dazu eignen sich insbesondere Granulate, die Azodicarbonamid enthalten. In Abhängigkeit von der zu erzielenden Flächenmasse und der Materialstärke der herzustellenden Kunststoffrecyclingplatte werden insbesondere 0,3 Massenprozent bis 1,0 Massenprozent, bevorzugt mindestens 0,5 Massenprozent und besonders bevorzugt 0,75 Massenprozent eines Treibmittelgranulates mit Azodicarbonamid während des Extrudierens zugesetzt.

"Füllstoffe" sind insbesondere unlösliche Zusatzstoffe, die zur Matrix des Materialblends zugegeben werden, um mechanische und/oder elektrische Eigenschaften und/oder Verarbeitungseigenschaften von Materialien des Materialblends und/oder -schmelze zu verändern. Bei dem Füllstoff kann es sich um eine mineralische und/oder nichtmineralische Komponente, wie beispielsweise Kaolin, Kreide und/oder Talkum, handeln. Der Füllstoff kann gleichzeitig auch als Flammschutzmittel wirken. Als Flammschutzmittel weist der Füllstoff insbesondere 10 bis 20 Massenprozent in der Kunststoffrecyclingplatte auf.

Ein "Flammschutzmittel" ist insbesondere ein Zusatzstoff, welcher eine Ausbreitung eines Brandes einschränkt, verlangsamt oder verhindert. Ein Flammschutzmittel und/oder mehrere Flammschutzmittel können insbesondere vorteilhaft in der Kunststoffrecyclingplatte eingesetzt sein, da sowohl PET-G als auch ABS und ein Schlagzähmodifier prinzipiell gut brennbar und nicht selbstverlöschend sind. Im Gegensatz dazu sind beispielsweise Hart-PVC-Profilplatten schwer entflammbar und selbstverlöschend und besitzen meist die Brandklasse B oder C.

Eine Ausführungsform der erfindungsgemäßen Kunststoffrecyclingplatte kann beispielsweise schwer entflammbar oder normal entflammbar ausgerüstet sein. Hierzu weist die Kunststoffrecyclingplatte beispielsweise eine Zusammensetzung von 58,0 Massenprozent PET-G, 20 Massenprozent ABS, 11 Massenprozent Schlagzähmodifier, 0,25 Massenprozent eines schwarzen Farbmasterbatches, 0,75 Massenprozent Treibmittel und 10,0 Massenprozent Flammschutzmittel auf. Zur Herstellung wird während des Herstellungsverfahrens das Flammschutzmittel insbesondere in das zu extrudierende Materialblend dosiert. Als Flammschutzmittel können beispielsweise phosphororganische, halogen- oder stickstoffhaltige Verbindungen und/oder Aluminiumhydroxid verwendet werden. Das Flammschutzmittel wird insbesondere in einem Bereich von 7 bis 15 Massenprozent, bevorzugt 10 bis 12,5 Massenprozent, eingesetzt. In der oben genannten Zusammensetzung der flammgeschützten Kunststoffrecyclingplatte liegt zumindest eine normal entflammbare, nicht brennend abtropfende oder eine schwer entflammbare Kunststoffrecyclingplatte mit selbstverlöschenden Eigenschaften vor. Alternativ oder ergänzend kann ein oben beschriebener Füllstoff als Flammschutzmittel eingesetzt werden.

Durch einen Zusatz von einem handelsüblichen Flammschutzmittel und/oder einem Füllstoff kann eine Verbesserung der brandhemmenden Eigenschaften und nach DIN EN 13501-1:2019-05 gegebenenfalls eine bessere Brandklasse der flammgeschützten Kunststoffrecyclingplatte erzielt werden. Zumindest wird durch Zusatz von einem Flammschutzmittel ein brennendes Abfallen verhindert. Bei einer mit einem Flammschutzmittel ausgerüsteten Kunststoffrecyclingplatte wurde bei einer Kleinbrennerprüfung gemäß DIN EN 11925-2:2020-07 mindestens die Brandklasse D oder sogar C nachgewiesen, wogegen eine Kunststoffrecyclingplatte ohne Flammschutzmittel nur die Brandklasse E aufweist und sich zusätzlich brennend abfallende Teile bilden können.

Prinzipiell können die oben genannten einzelnen Additive, Zuschlags- und/oder Hilfsstoffe vorteilhaft jeweils einzeln während des Extrudierens separat zudosiert werden oder frei zusammen in einem Masterbatch kombiniert und eingesetzt werden.

Um eine nicht-transparente und/oder abschattende Kunststoffrecyclingplatte als Dach- und/oder Wandelement bereitzustellen, weist die Kunststoffrecyclingplatte mindestens 20,0 Massenprozent recyceltes Acrylnitril-Butadien-Styrol-Copolymer auf, sodass eine lichtundurchlässige Kunststoffrecyclingplatte vorliegt.

Auch in diesem Fall kann die lichtundurchlässige Kunststoffrecyclingplatte profiliert sein und beispielsweise bevorzugt eine Materialstärke in einem Bereich von 1,5 mm bis 3,0 mm aufweisen.

Um die Kunststoffrecyclingplatte als Lichtplatte für ein Dach und/oder eine Wand zu verwenden, weist die Kunststoffrecyclingplatte mindestens 95,0 Massenprozent, bevorzugt mindestens 99,0 Massenprozent, recyceltes, mit Glykol modifiziertes Polyethylenterephthalat auf, sodass eine lichtdurchlässige Kunststoffrecyclingplatte vorliegt.

Somit kann die lichtdurchlässige Kunststoffrecyclingplatte beispielweise 99,6 Massenprozent PET-G, 0,3 Massenprozent UV-Stabilisator und 0,1 Massenprozent Antiblockingmittel aufweisen. Als profilierte lichtdurchlässige Kunststoffrecyclingplatte ist oder wird diese insbesondere mit Materialstärken in einem Bereich von 0,7 mm bis 2,5 mm hergestellt. Für eine Lichtplatte wird insbesondere klar-transparentes oder bläulich-transparentes (getöntes) PET-G-Recyclingmaterial verwendet.

In einem weiteren Aspekt der Erfindung wird die Aufgabe gelöst durch eine Polymermischung zum Herstellen einer Kunststoffrecyclingplatte, wobei die Polymermischung mindestens 50,0 Massenprozent recyceltes, mit Glykol modifiziertes Polyethylenterephthalat und recyceltes Acrylnitril-Butadien-Styrol-Copolymer und optional ein Additiv oder zwei oder mehrere Additive aufweist.

Somit wird eine Polymermischung bereitgestellt, mit welcher durch Extrusion über einen Extruder, insbesondere über einen konischen Doppelschneckenextruder, eine flache, ebene Materialbahn oder direkt eine weitestgehend ebene Kunststoffrecyclingplatte fertigbar ist.

In einem zusätzlichen Aspekt der Erfindung wird die Aufgabe gelöst durch ein Verfahren zum Herstellen einer Kunststoffrecyclingplatte, mit folgenden Schritten:
- Zuführen von mindestens 50,0 Massenprozent recyceltem, mit Glykol modifizierten Polyethylenterephthalat und optional von recyceltem Acrylnitril-Butadien-Styrol-Copolymer und optional Zusetzen von mindestens einem Additiv in einem Extruder, insbesondere in einem konischen, gegenläufig drehenden Doppelschneckenextruder, und Homogenisieren zu einem Materialblend,
- Aufschmelzen des Materialblends zu einer Materialschmelze,
- Extrudieren der Materialschmelze mittels einer Extrusionsdüse in eine flache Materialbahn, und
- zumindest Glätten und optional Prägen und/oder Umformen der flachen Materialbahn mittels mindestens Glättwalzen, Prägewalzen- und/oder mittels eines Profilwerkzeuges,
sodass eine zuvor beschriebene Kunststoffrecyclingplatte vorliegt.

PET-G und optional ABS als trockene oder vorgetrocknete Recyclingmaterialien können in einem kontinuierlichen Prozess über Fördereinrichtungen als einzelne Komponenten dem Extruder zugeführt werden. Ebenso können entsprechend einer Vorgabe zur Zusammensetzung des Materialblends und der gefertigten Kunststoffrecyclingplatte Additive, wie UV-Stabilisator, Antiblockingmittel, Schlagzähmodifier, Farbmittelbatches, Treibmittel und/oder Flammschutzmittel, als Nebenkomponenten über geeignete Dosiereinrichtungen in den Extruder zugeführt werden. Beim Extrudieren erfolgt insbesondere ein Pressen der Materialschmelze durch eine Breitschlitzdüse als Extrusionsdüse. Nach dem Extrudieren wird die heiße Materialschmelze aus dem Recyclingmaterialblend sofort durch einen Walzenstuhl, insbesondere einen 3- Walzenstuhl, geführt, wobei wahlweise glatte Walzen und/oder strukturierte Walzen, je nach geforderter Oberfläche der Kunststoffrecyclingplatte, zum Einsatz kommen können. Hierbei wird bevorzugt zunächst ein Abkühlen und Glätten und/oder Prägen der ebenen Materialbahn über den 3-Walzenstuhl durchgeführt, bevor ein Umformen und/oder Profilieren mittels eines Profilwerkzeuges erfolgt. Die Walzen zum Glätten und/oder Prägen können regelbare Temperaturen in einem Bereich von 50 °C bis 70 C aufweisen, welche an die Dicke der zu kühlenden Materialbahn anpassbar sind. Prinzipiell stehen verschiedene Strukturwalzen zur Verfügung, mit denen eine frostartige Oberfläche, eine wabenartige Oberfläche mit Prismen und/oder auch eine gerillte und/oder geriffelte Oberfläche in die Materialbahn aus Recyclingmaterial und/oder das plattenförmige Kunststoffrecyclinghalbzeug eingeprägt werden kann. Insbesondere zur Fertigung von lichtdurchlässigen Kunststoffrecyclingplatten wird der Walzenstuhl mit Glattwalzen ohne Prägestruktur verwendet. Jedoch ist auch eine einseitige Prägung über eine Strukturwalze für lichtdurchlässige Kunststoffrecyclingplatten mit einem Streulichteffekt möglich. Bevorzugt wird eine Kombination aus Froststruktur auf einer Oberseite und einer ebenen Struktur auf einer Unterseite der Materialbahn für opake und flammgeschützte Kunststoffrecyclingplatten entsprechend der oben angegebenen jeweiligen Zusammensetzung verwendet. Jedoch ist auch eine Kombination von zwei strukturgebenden Walzen denkbar, wodurch beide Seiten der Flachbahn eine Prägestruktur erhalten.

Die ebene, glatte und/oder geprägte Bahn aus Recyclingmaterialblend kann durch erneutes Erwärmen und eine Formgebung durch ein starres, gekühltes Profilwerkzeug zur profilierten Materialbahn umgeformt werden, welche anschließend durch einen Randbeschnitt auf die erforderliche Breite und über ein beheiztes Scherenmesser auf die gewünschte Länge geschnitten werden kann. Die so erhaltenen Kunststoffrecyclingplatten werden letztendlich versandbereit palettiert.

Somit wird ein Verfahren bereitgestellt, mit welchem in einfacher Weise eine Kunststoffrecyclingplatte herstellbar ist. Es ist besonders vorteilhaft, dass die Fertigung der Kunststoffrecyclingplatte aus dem Materialblend aufweisend recyceltes PET-G und recyceltes ABS mittels eines konischen Doppelschneckenextruders und somit einer konventionellen Hart-PVC-Extrusionsanlage erfolgt. Hierbei wird das Blend aus den Recyclingmaterialien PET-G und ABS und den jeweils benötigten Additiven in einem Doppelschneckenextruder mit konisch geschnittenen, gegenläufig drehenden Schnecken verarbeitet, welcher ursprünglich speziell für die Verarbeitung von pulverförmigen PVC-Dryblends konzipiert worden ist. Durch die gezielten, verschiedenen Anpassungen der Dosiertechnik und des Temperaturprofils an dem Hart-PVC-Extruder mit konischen Doppelschnecken und durch Anpassen der nachfolgenden zugehörigen Aggregate ist die Fertigung der erfindungsgemäßen Kunststoffrecyclingplatten ermöglicht.

In einer weiteren Ausgestaltungsform des Verfahrens wird oder werden beim Zuführen in den Extruder eine Temperatur in einem Bereich von 130 °C bis 160 °C, beim Homogenisieren und Aufschmelzen ein Temperaturbereich von 180 °C bis 230 °C, bei einem Austragen eine Temperatur zwischen 200 °C bis 220 °C, beim Extrudieren durch die Extrusionsdüse mit einem eingestellten Temperaturbereich von 190 °C bis 200 °C eine Temperatur der Materialschmelze in einem Bereich von 205 bis 215 °C verwendet.

Insbesondere in einem Extruder mit konischen Doppelschnecken erfolgt über die Einzugszone bei 130 °C bis 160 °C die Vorwärmung und in der Mischzone zwischen 180 °C und 230 °C die Homogenisierung und Plastifizierung des Recyclingmaterialblends. In dem sich anschließenden relativ kurzen Kompressionsbereich des Doppelschneckenextruders wird die Materialschmelze verdichtet, wobei in der nachfolgenden Entgasungszone bei Temperaturen zwischen 200 °C und 220 °C über eine Entgasungsöffnung durch angelegten Unterdruck Wasserdampf und weitere gasförmige Nebenprodukte abgezogen werden. In der letzten Zone des Doppelschneckenextruders mit speziellen Mischelementen, auch Austragszone genannt, werden bei circa 200 °C bis 220 °C Temperaturinhomogenitäten in der Schmelze verringert und ein gleichmäßiger Massedruck aufgebaut, um die Materialschmelze über einen Adapter mit 190 °C in einer Extrusionsdüse, insbesondere in einer Breitschlitzdüse, zu verteilen. Dadurch werden Schmelztemperaturen zwischen 205 °C und 215 °C erreicht. Die Temperaturen der Breitschlitzdüse werden zur optimalen Verteilung der Materialschmelze zwischen 190 °C und 200 °C eingestellt.

Vor dem Zuführen kann ein Trocknen des recycelten, mit Glykol modifizierten Polyethylenterephthalates und optional von recyceltem Acrylnitril-Butadien-Styrol-Copolymer durchgeführt werden.

Um den Feuchtigkeitsgehalt der Recyclingmaterialien zu verringern und/oder die Verarbeitbarkeit zu verbessern, können das recycelte PET-G und optional auch das recycelte ABS als Mahlgut und/oder Regranulat vor dem Zuführen getrocknet werden. Das vorgelagerte Trocknen kann beispielsweise in separaten Industrietrocknern erfolgen. Das Trocknen wird bei recyceltem PET-G beispielsweise für mindestens zwei Stunden bei 65 °C bis 68 °C durchgeführt. Bei recyceltem ABS kann das Trocknen bei 80 °C für zwei bis drei Stunden erfolgen. Anschließend werden diese vorgetrockneten Recyclingmaterialien dem Extruder zugeführt.

In einer weiteren Ausgestaltungsform des Verfahrens wird oder werden das recycelte, mit Glykol modifizierte Polyethylenterephthalat und/oder das recycelte Acrylnitril-Butadien-Styrol-Copolymer als Mahlgut und/oder Regranulat zugeführt.

Der jeweils recycelte Kunststoff kann als Mahlgut eine Partikelgröße in einem Bereich von 0,5 mm bis 15,0 mm, insbesondere von 1,0 mm bis 10,0 mm, aufweisen. Der jeweils recycelte Kunststoff kann als Regranulat eine Korngröße in einem Bereich von 2,0 mm bis 3,0 mm aufweisen. Das Regranulat kann beispielsweise eine Kugel- und/oder Zylinder-Form aufweisen.

Zur Herstellung einer lichtdurchlässigen Kunststoffrecyclingplatte mit oben angegebenen Verfahren wird beispielsweise ein Materialblend mit 99,6 Massenprozent an PET-G Mahlgut, 0,3 Massenprozent UV-Stabilisator und 0,1 Massenprozent Antiblockingmittel verwendet. Für eine opake Kunststoffrecyclingplatte kann das Materialblend vor dem Aufschmelzen in dem Extruder eine Zusammensetzung aus 64,0 Massenprozent PET-G Mahlgut, 22,0 Massenprozent ABS Regranulat, 11,5 Massenprozent Schlagzähmodifier, 2,0 Massenprozent grüner Farbmasterbatch und 0,5 Massenprozent Treibmittel aufweisen. Zum Fertigen einer zumindest nicht brennend abfallenden und aufgeschäumten Kunststoffrecyclingplatte kann das Materialblend eine Zusammensetzung von 58,0 Massenprozent PET-G Mahlgut, 20,0 Massenprozent ABS Regranulat, 11,0 Massenprozent Schlagzähmodifier, 0,25 Massenprozent schwarzer Farbmasterbatch, 0,75 Massenprozent Treibmittel und 10,0 Prozent Flammschutzmittel aufweisen.

Zur Herstellung einer opaken Recyclingplatte kann ein Aufschäumen während des Extrudierens durchgeführt werden. Zum Aufschäumen wird insbesondere ein oben beschriebenes Treibmittel verwendet.

Im Weiteren wird die Erfindung anhand von Ausführungsbeispielen erläutert. Es zeigen
- Figur 1: eine stark schematische Schnittdarstellung einer Kunststoffrecyclingplatte mit Wellenprofil, und

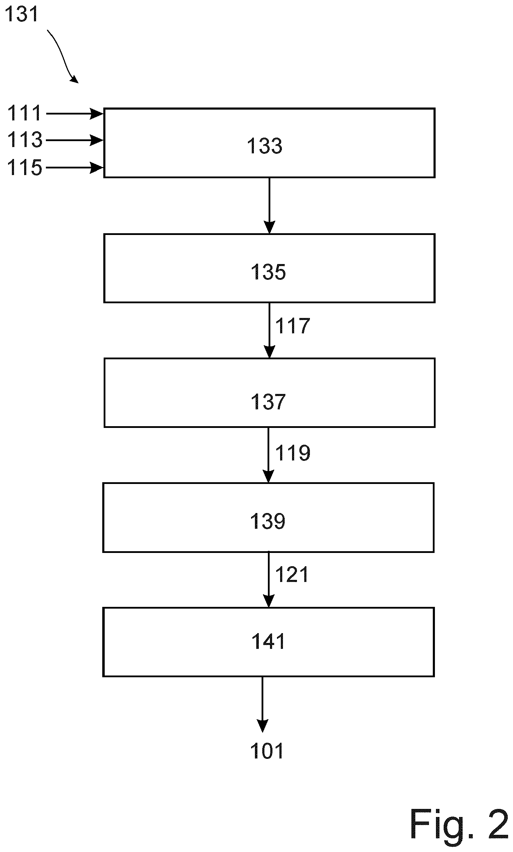

- Figur 2: eine schematische Darstellung von Verfahrensschritten eines Verfahrens zum Herstellen der Kunststoffrecyclingplatte.

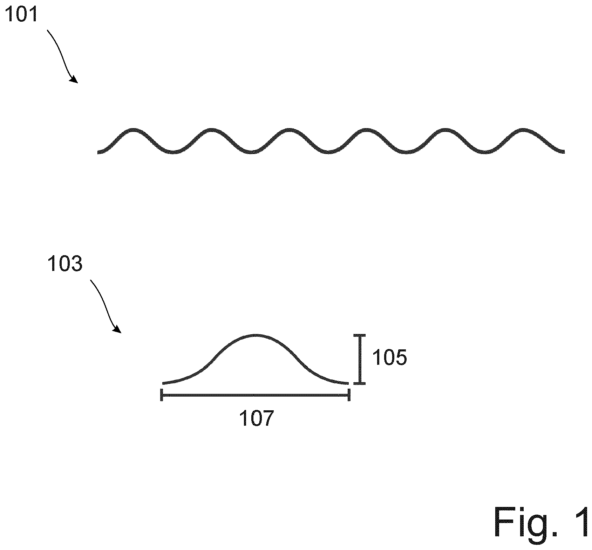

Eine Kunststoffrecyclingplatte 101 zum Erstellen eines Daches weist ein Wellenprofil 103 auf. Das Wellenprofil 103 weist eine Profilhöhe 105 von 34 mm und eine Profilbreite 107 von 94 mm auf (Figur 1). Die Kunststoffrecyclingplatte 101 ist opak und weist 64,0 Massenprozent recyceltes PET-G und 22,0 Massenprozent recyceltes ABS sowie 14,0 Prozent Additive auf.

Die Kunststoffrecyclingplatte 101 ist in einem Verfahren 131 zum Herstellen mit folgenden Arbeitsschritten mittels eines konischen Doppelschneckenextruders gefertigt:

Dem Doppelschneckenextruder werden jeweils separat vorgetrocknetes PET-G Mahlgut 111 und vorgetrocknetes ABS Regranulat 113 zugeführt (Schritt 133). Das Zuführen erfolgt in einer Einzugszone des Doppelschneckenextruders bei 150 °C. Ebenso wird ein Zusetzen der Additive 115 über eine gleiche Einfüllöffnung in die Einzugszone durchgeführt. Ein Homogenisieren 135 erfolgt in einer Mischzone des Doppelschneckenextruders bei 180 °C. Das homogenisierte Materialblend 117 weist eine Zusammensetzung von 64,0 Massenprozent PET-G Mahlgut 111, 22,0 Massenprozent ABS Regranulat 113, 11,5 Massenprozent Schlagzähmodifier, 2,0 Massenprozent eines grünen Farbmasterbatches und 0,5 Massenprozent Treibmittel auf.

Das homogenisierte Materialblend 117 wird im Folgenden bei 190 °C zu einer Materialschmelze 119 plastifiziert (Aufschmelzen 137) und in einer Kompressionszone verdichtet. Nach Fluss durch eine Entgasungszone bei 210 °C und nochmaligem Mischen der Materialschmelze 119 in einer Austragszone bei ca. 200°C wird die Materialschmelze 119 mittels einer Breitschlitzdüse des Doppelschneckenextruders extrudiert (Schritt 139), wodurch eine flache Materialbahn 121 vorliegt. Das Extrudieren 139 erfolgt bei einer Düsentemperatur von 190 °C.

Anschließend erfolgt zunächst ein Abkühlen, Glätten und/oder Prägen der Materialbahn 121 über gekühlte Walzen und nachfolgend eine nochmalige Erwärmung der Materialbahn 121 und Profilgebung (Wellenform) durch thermisches Umformen (Schritte 141). Nach Randbeschnitt und Zuschnitt auf eine zu produzierende Länge liegt die gefertigte, profilierte Kunststoffrecyclingplatte 101 vor. Die gefertigte Kunststoffrecyclingplatte 101 weist eine Materialstärke von 2,5 mm auf.

Somit wird eine Kunststoffrecyclingplatte 101 bereitgestellt, welche nachhaltig aus PET-G Mahlgut 111 und ABS Regranulat 113 angepasst gefertigt ist und aufgrund ihrer eingestellten Eigenschaften als Dachelement mit einer hohen Standzeit einsetzbar ist.

### Bezugszeichenliste

- 101: Kunststoffrecylingplatte
- 103: Wellenprofil
- 105: Profilhöhe
- 107: Profilbreite
- 111: PET-G Mahlgut
- 113: ABS Regranulat
- 115: Additive
- 117: Materialblend
- 119: Materialschmelze
- 121: flache Materialbahn
- 131: Verfahren zum Herstellen einer Kunststoffrecyclingplatte
- 133: Zuführen
- 135: Homogenisieren
- 137: Aufschmelzen
- 139: Extrudieren
- 141: Glätten, Prägen und Umformen

## Patentansprüche

1. Kunststoffrecylingplatte (101) zur Verwendung als Dachelement und/oder Wandelement, **dadurch gekennzeichnet, dass** die Kunststoffrecylingplatte (101) mindestens 50,0 Massenprozent recyceltes, mit Glykol modifiziertes Polyethylenterephthalat (111) aufweist.

2. Kunststoffrecylingplatte (101) nach Anspruch 1, **dadurch gekennzeichnet, dass** die Kunststoffrecylingplatte (101) zusätzlich recyceltes Acrylnitril-Butadien-Styrol-Copolymer (113) aufweist, wobei das recycelte, mit Glykol modifizierte Polyethylenterephthalat (111) und das recycelte Acrylnitril-Butadien-Styrol-Copolymer (113) sich bis zu 100,0 Massenprozent ergänzen.

3. Kunststoffrecylingplatte (101) nach einem der vorherigen Ansprüche, **dadurch gekennzeichnet, dass** die Kunststoffrecylingplatte (101) zumindest teilweise profiliert ist.

4. Kunststoffrecylingplatte (101) nach einem der vorherigen Ansprüche, **dadurch gekennzeichnet, dass** die Kunststoffrecylingplatte (101) zumindest teilweise geschäumt ist.

5. Kunststoffrecylingplatte (101) nach einem der vorherigen Ansprüche, **dadurch gekennzeichnet, dass** die Kunststoffrecylingplatte (101) zusätzlich mindestens ein Additiv (115) aufweist, wobei das recycelte, mit Glykol modifizierte Polyethylenterephthalat (111) und optional das recycelte Acrylnitril-Butadien-Styrol-Copolymer (113) und das Additiv (115) oder zwei oder mehrere Additive sich jeweils zu 100,0 Massenprozent ergänzen.

6. Kunststoffrecylingplatte (101) nach Anspruch 5, **dadurch gekennzeichnet, dass** das Additiv oder zwei oder mehrere Additive ein Schlagzähmodifier, ein Farbstoff, ein UV-Stabilisator, ein Antiblockingmittel (115), ein Treibmittel, ein Füllstoff und/oder ein Flammschutzmittel ist oder sind.

7. Kunststoffrecylingplatte (101) nach einem der Ansprüche 1 bis 6, **dadurch gekennzeichnet, dass** die Kunststoffrecylingplatte (101) mindestens 20,0 Massenprozent recyceltes Acrylnitril-Butadien-Styrol-Copolymer (113) aufweist, sodass eine lichtundurchlässige Kunststoffrecylingplatte (101) vorliegt.

8. Kunststoffrecylingplatte (101) nach einem der vorherigen Ansprüche 1, 3, 5 oder 6, **dadurch gekennzeichnet, dass** die Kunststoffrecylingplatte (101) mindestens 95,0 Massenprozent, bevorzugt mindestens 99,0 Massenprozent, recyceltes, mit Glykol modifiziertes Polyethylenterephthalat (111) aufweist, sodass eine lichtdurchlässige Kunststoffrecylingplatte (101) vorliegt.

9. Verfahren (131) zum Herstellen einer Kunststoffrecylingplatte (101), mit folgenden Schritten:
- Zuführen (133) von mindestens 50,0 Massenprozent recyceltem, mit Glykol modifizierten Polyethylenterephthalat (111) und optional von recyceltem Acrylnitril-Butadien-Styrol-Copolymer (113) und optional Zusetzen von mindestens einem Additiv (115) in einem Extruder, insbesondere in einem konischen Doppelschneckenextruder, und Homogenisieren (135) zu einem Materialblend (117),
- Aufschmelzen (137) des Materialblends (117) zu einer Materialschmelze (119),
- Extrudieren (139) der Materialschmelze (119) mittels einer Extrusionsdüse in eine flache Materialbahn (121), und
- zumindest Glätten und optional Prägen und/oder Umformen (141) der flachen Materialbahn (121) mittels Glättwalzen-, Prägewalzen und/oder mittels eines Profilwerkzeuges,
sodass eine Kunststoffrecylingplatte (101) nach einem der Ansprüche 1 bis 8 vorliegt.

10. Verfahren (131) nach Anspruch 9, **dadurch gekennzeichnet, dass** beim Zuführen (133) in den Extruder eine Temperatur in einem Bereich von 130°C bis 160°C, beim Homogenisieren (135) und Aufschmelzen (137) ein Temperaturbereich von 180°C bis 230°C, nach einem Entgasen bei einem Austragen eine Temperatur zwischen 200°C bis 220°C, beim Extrudieren (139) durch die Extrusionsdüse mit einem eingestellten Temperaturbereich von 190°C bis 200°C eine Temperatur der Materialschmelze (119) in einem Bereich von 205° bis 215°C verwendet wird oder werden.

11. Verfahren (131) nach Anspruch 9 oder 10, **dadurch gekennzeichnet, dass** vor dem Zuführen (133) ein Trocknen des recycelten, mit Glykol modifizierten Polyethylenterephthalates und optional von recyceltem Acrylnitril-Butadien-Styrol-Copolymer durchgeführt wird.

12. Verfahren (131) nach einem der Ansprüche 8 bis 11, **dadurch gekennzeichnet, dass** das recycelte, mit Glykol modifizierte Polyethylenterephthalat (111) und/oder das recycelte Acrylnitril-Butadien-Styrol-Copolymer (113) als Mahlgut und/oder Regranulat zugeführt wird oder werden.

13. Verfahren (131) nach Anspruch 12, **dadurch gekennzeichnet, dass** das Mahlgut mit einer Partikelgröße in einem Bereich von 0,5 mm bis 15,0 mm, insbesondere von 1,0 mm bis 10,0 mm eingesetzt wird.

14. Verfahren (131) nach Anspruch 12 oder 13, **dadurch gekennzeichnet, dass** das Regranulat mit einer Partikelgröße in einem Bereich von 1,0 mm bis 4,0 mm, insbesondere von 2,0 mm bis 3,0 mm eingesetzt wird.

15. Verfahren (131) nach einem der vorherigen Ansprüche, **dadurch gekennzeichnet, dass** ein Aufschäumen während des Extrudieren (139) durchgeführt wird.
